# EUROPÄISCHE PATENTSCHRIFT

(11) **EP 0 379 640 B1**
(45) Veröffentlichungstag und Bekanntmachung des Hinweises auf die Patenterteilung: **02.03.1994**
(21) Anmeldenummer: 89116524.3
(22) Anmeldetag: 07.09.1989
(51) Int. Cl.: H04B 1/38

(54) **Übertragungssystem für Funksende- und -empfangsgerät**
Transmission system for a radio transceiver
Système de transmission pour émetteur-récepteur radio

(30) Priorität: 24.12.1988 DE 3843842
(43) Veröffentlichungstag der Anmeldung: 01.08.1990
(73) Patentinhaber: ROBERT BOSCH GMBH, 70442 Stuttgart (DE)
(72) Erfinder: Ketterling, Hans-Peter, Dipl.-Ing., D-1000 Berlin 42 (DE); Krockenberger, Klaus, Dipl.-Ing., D-8504 Stein (DE); Pfitzmann, Dieter, Dipl.-Ing., D-1000 Berlin 37 (DE)

(56) Entgegenhaltungen:
- WO-A-86/03926
- DE-A- 3 406 671
- US-A- 4 398 265

## Beschreibung

### Stand der Technik

Die Erfindung geht aus von einem Übertragungssystem nach dem Oberbegriff des Hauptanspruchs. Es ist ein Übertragungssystem bekannt (Bosch Technische Information, Mobile Sprechfunkanlagen KF mini-S (KF 83/163/453), Impressum EK-VKD 8 699 920 919 (08410) F), bei dem zwischen einem Funksende- und -empfangsgerät und einem zugehörigen mobilen Bedienteil ein vieladriges Kabel vorgesehen ist, über das Sprachsignale und ggf. auch Steuersignale in beiden Richtungen übertragen werden können. Dieses System gestattet jedoch keine Reduzierung der Zahl der Verbindungsadern; außerdem ist keine Anschaltung weiterer Bedienteile an das Funksende- und -empfangsgerät möglich.

Aus der WO 86/03926 ist ein Funksende- und -empfangsgerät nach dem Oberbegriff des vorliegenden Anspruchs 1 bekannt, an dem eine Vielzahl von peripheren Geräten über einen seriellen Bus anschließbar ist. Die Information wird über den seriellen Bus ausgetauscht.

Aus der DE-A-34 06 671 ist eine Schaltungsanordnung zur Erhöhung der Störsicherheit und Verfügbarkeit von elektronischen Anlagen bekannt, bei der die Ausgangsbausteine mit einem RC-Glied beschaltet sind, durch das die Signalflanken verschliffen werden und damit die Störimmunität erhöht wird.

### Vorteile der Erfindung

Das erfindungsgemäße Übertragungssystem mit den Merkmalen des Hauptanspruchs hat demgegenüber den Vorteil, daß im günstigsten Fall nur eine zwei Leiter umfassende Leitung zwischen einem Funksende- und -empfangsgerät und einem peripheren Gerät erforderlich ist, die störstrahlungsarm und störeinstrahlungsunanfällig ist. Dadurch wird erreicht, daß der Funkempfang durch die Signale auf dem Leiter nicht gestört wird und außerdem bei Sendung keine störenden Signale in den Leiter eindringen können. Dadurch wird es möglich, auch weitere periphere Geräte anzuschließen, ohne daß sich dadurch eine Verschlechterung hinsichtlich der Störstrahlungsaussendung bzw. Störeinstrahlung ergibt. Bei Funktelefonsystemen ergibt sich dadurch eine erhebliche Vereinfachung der Leitungsverbindung mit peripheren Ein- und Ausgabekomponenten ohne die Gefahr gefährlicher HF-Einstreuungen oder -aussendungen.

### Beschreibung

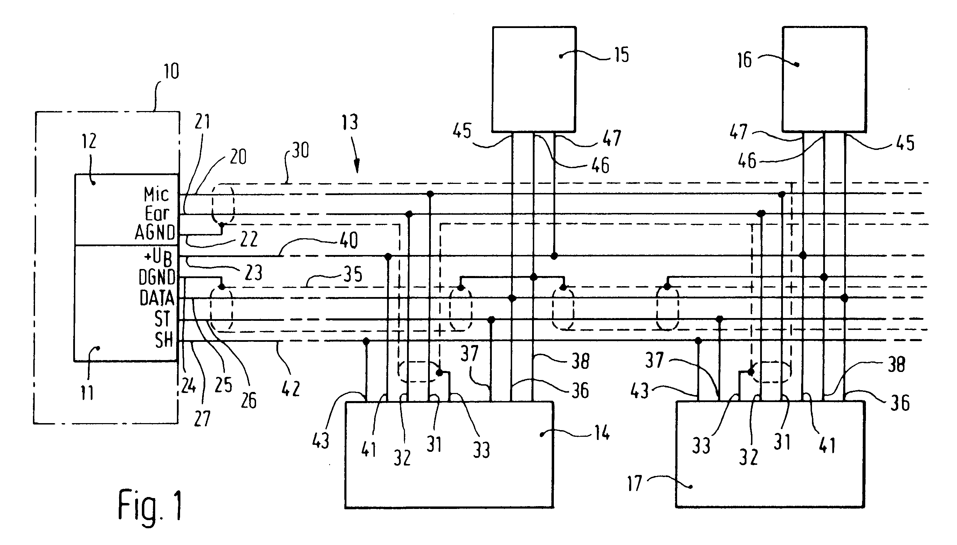

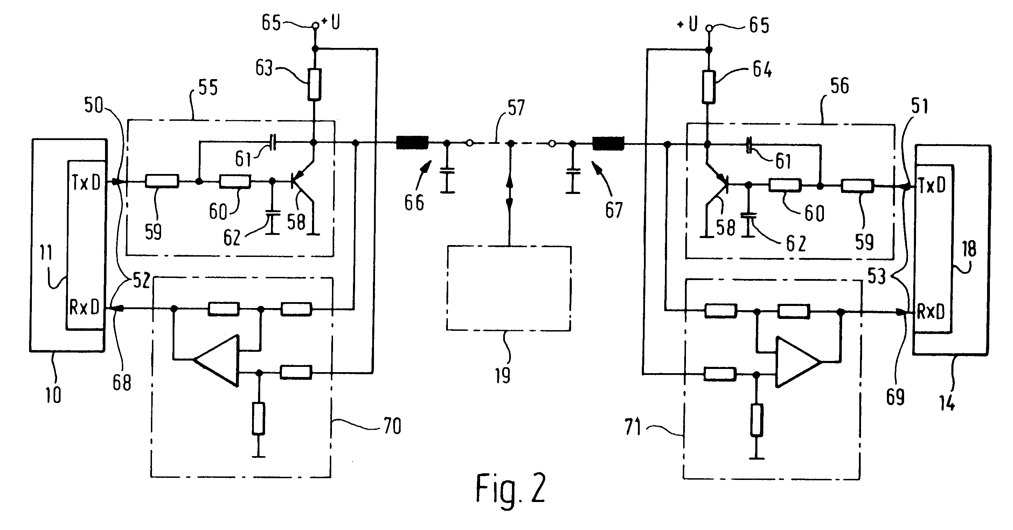

Ausführungsbeispiele der Erfindung sind in der Zeichnung anhand zweier Figuren dargestellt und werden im folgenden näher beschrieben. Es zeigen Figur 1 ein Blockschaltbild eines Funksende- und -empfangsgerätes mit über Busleitungen angeschlossenen Bedienteilen, einem Kartenleser und einem Display und Figur 2 ein ausführlicheres Blockschaltbild zu Figur 1 mit einem Funksende- und -empfangsgerät und einem Bedienteil.

Ein Übertragungssysstem gemäß dem Blockschaltbild nach Fig. 1 umfaßt ein Funksende- und -empfangsgerät 10, das ist vorzugsweise ein Funktelefon, mit einem Mikrocomputer-Steuerblock 11 und einer analogen Signalaufbereitungsschaltung 12. Mit dem Mikrocomputer-Steuerblock und der Signal aufbereitungsschaltung sind über Leitungen 13 ein erstes Bedienteil 14, ein Datenterminal 15, ein Kartenleser 16 und ein zweites Bedienteil 17 verbunden. Die Signalaufbereitungsschaltung 12 hat einen Mikrofonanschluß 20, einen Höreranschluß 21 und einen Masseanschluß 22 und der Mikrocomputer-Steuerblock 11 einen Betriebsspannungsanschluß 23, einen weiteren Masseanschluß 24, einen Datenanschluß 25, einen Steuerleitungsanschluß 26 und einen Schaltleitungsanschluß 27.

Der Mikrofonanschluß 20 und der Höreranschluß 21 sind über eine erste abgeschirmte Leitung 30 mit einem Mikrofonanschluß 31 und einem Höreranschluß 32 des ersten und zweiten Bedienteils 14, 17 verbunden. Die Abschirmung der ersten abgeschirmten Leitung 30 ist mit dem Masseanschluß 22 der Signalaufbereitungsschaltung 12 und mit je einem Masseanschluß 33 des ersten und zweiten Bedienteils 14, 17 verbunden.

Der Datenanschluß 25 und der Steuerleitungsanschluß 26 sind über eine zweite abgeschirmte Leitung 35 mit einem Datenanschluß 36 und einem Steuerleitungsanschluß 37 des ersten und zweiten Bedienteils 14, 17 verbunden. Die Abschirmung der zweiten abgeschirmten Leitung 35 ist mit dem weiteren Masseanschluß 24 des Mikrocomputer-Steuerblocks 11 sowie mit Masseanschlüssen 38 des ersten und zweiten Bedienteils 14, 17 verbunden.

Der Betriebsspannungsanschluß 23 des Mikrocomputer-Steuerblocks 11 steht über eine Betriebspotentialleitung 40 mit Betriebsspannungsanschlüssen 41 und der Schaltleitungsanschluß 27 über eine Schaltleitung 42 mit Schaltleitungsanschlüssen 43 der Bedienteile 14 und 17 in Verbindung. Der Datenanschluß 25 und der weitere Masseanschluß 24 stehen außerdem über die zweite abgeschirmte Leitung 35 noch mit je einem Datenanschluß 45, je einem Masseanschluß 46 und der Betriebsspannungsanschluß 23 über die Leitung 40 mit je einem Betriebsspannungsanschluß 47 des Datenterminals 15 und des Kartenlesers 16 in Verbindung.

Für die Sprachsignal-, Datensignal-, Steuersignal- und Schaltsignalübertragung zwischen dem Funksende- und -empfangsgerät 10 und den Bedienteilen 14, 17 werden somit nur insgesamt acht Leitungsadern benötigt, wobei die Abschirmungen der Leitungen 30, 40 auch als Leitungsadern gewertet werden. Die vergleichsweise geringe Zahl von Leitungsadern ist deshalb möglich, weil der Datensignalanschluß 25 innerhalb des Mikrocomputer-Steuerblocks 11 eine Wired-AND-Struktur aufweist; vgl. auch Fig. 2.

Gemäß Fig. 2 sind an die Datenausgänge 50, 51 der Ports 52, 53 der Mikrocomputer-Steuerblöcke 11, 18 (TxD) des Funksende- und -empfangsgerätes 10 und des Bedienteils 14 sowie gegebenenfalls weiterer peripherer Geräte 19 je ein aktives Pulsfilter 55, 56 angeschlossen. Die aktiven Pulsfilter enthalten je zwei zwischen dem Datenausgang 50 bzw. 51 und der Basis eines Transistors 58 in Reihe liegende Widerstände 59, 60. Von dem Verbindungspunkt zwischen den beiden Widerständen 59, 60 führt eine Verbindung über einen ersten Kondensator 61 zu dem Emitter des Transistors 58. Ein zweiter Kondensator 62 verbindet die Basis des Transistors 58 mit dem Massepotential. Die Emitter der Transistoren 58 stehen über je einen Pull-up-Widerstand 63, 64 mit einem Anschluß 65 positiven Potentials von zum Beispiel 5 V in Verbindung. An die Emitter der Transistoren 58 bzw. an die Ausgänge der aktiven Pulsfilter 55, 56 schließt sich je ein passives Pulsfilter 66, 67 an, das ist vorzugsweise ein LC-Filter. Die Pulsfilter 55, 56, 66, 67 haben den Zweck, die Flanken der in die Datensignalleitung 57 einzuspeisenden Datensignale zu verschleifen und damit deren Flankensteilheit zu reduzieren. Die aktiven Pulsfilter 55, 56 haben beispielsweise eine Grenzfrequenz von etwa 5 kHz und die passiven Pulsfilter 66, 67 eine Grenzfrequenz von etwa 100 kHz. Um die mit reduzierter Flankensteilheit übertragenen Datensignale in den Mikrocomputer-Steuerblöcken 11, 18 auswerten zu können, liegt vor jedem Dateneingang 68, 69 (RxD) je ein Schwellwertschalter 70, 71, das ist vorzugsweise ein Schmitt-Trigger mit einem dem Fachmann geläufigen Aufbau.

Die Ports 52, 53 des Funksende- und -empfangsgerätes 10 und des Bedienteils 14 sowie die Ports weiterer peripherer Geräte 19 gehören zu je einem seriellen Interface, dessen Schnittstelle vorzugsweise der Norm RS 232 C oder V24 entspricht. Die Signalübertragung erfolgt vorzugsweise asynchron im NRZ-(no return to zero)-Format. Als Datensicherungsverfahren für die Datenübertragung eignet sich beispielsweise ein Cyclic-Redundancy-Check-Verfahren. Die Daten werden blockweise seriell und mit dem Bit der geringsten Wertigkeit beginnend übertragen.

Die Wirkungsweise der Schaltungsanordnung nach Fig. 2 ist folgende:
Werden beispielsweise von dem Funksende- und -empfangsgerät 10 an dem Datenausgang 50 serielle Datenblöcke abgegeben, so werden mittels des aktiven Pulsfilters 55 und des passiven Pulsfilters 66 die Flanken der einzelnen Bits abgeschliffen, und die Datenblöcke werden über die Datenleitung 57 zu dem Dateneingang 69 des Bedienteils 14 übertragen, Vor dem Dateneingang 69 liegt der Schwellwertschalter 71, der aus den abgeschliffene Flanken aufweisenden Datensignalen Rechteckimpulse bildet. Die Pull-up-Widerstände 63 und 64 bewirken, daß beliebig viele periphere Geräte an die Datenleitung 57 angeschlossen werden können.

## Patentansprüche

1. Übertragungssystem für digitale und analoge Signale, mit seriellen Schnittstellen an einem Mikrocomputersteuerblock (11) eines Funksende- und -empfangsgerätes (10) und mindestens einem an den Steuerblock über Leitungsverbindungen (13) angeschlossenen peripheren Gerät (14), wobei an Verzweigungspunkten der verwendeten Datensignalleitung (57) Datenein- und -ausgänge weiterer peripherer Geräte (19) anschließbar sind, dadurch gekennzeichnet, daß an den Datenausgängen (50, 51) der Ports (52, 53) der Steuerblöcke (11, 18) des Funksende- und -empfangsgeräts (10) und des peripheren Geräts (14) je ein Pulsfilter (55; 66; 56; 67) vorgesehen ist, das die Flanken der über die als eine bidirektionale Datensignalleitung ausgebildete Datensignalleitung (57) zu übertragenden Datensignale verschleift und damit deren Flankensteilheit reduziert, daß die Datensignalleitung (57) in Wired-AND-Struktur zwischen einem Pull-up-Widerstand (63) am Datenausgang (50) des Steuerblocks (11) des Funksende- und -empfangsgerätes (10) und einem Pull-up-Widerstand (64) am Datenausgang (51) des peripheren Gerätes (14) vorgesehen ist.

2. Übertragungssystem nach Anspruch 1, dadurch gekennzeichnet, daß die peripheren Geräte (14, 17) je einen Mikrocomputersteuerblock (18) aufweisen.

3. Übertragungssystem nach Anspruch 2, dadurch gekennzeichnet, daß die Mikrocomputersteuerblöcke (11, 18) ein eingebautes serielles Interface aufweisen.

4. Übertragungssystem nach einem der Ansprüche 2 und 3, dadurch gekennzeichnet, daß die Schnittstellen der Mikrocomputersteuerblöcke (11, 18) durch integrierte Schnittstellentreiberschaltungen zu einer RS-232-C- oder V24-Schnittstelle ergänzt sind.

5. Übertragungssystem nach einem der Ansprüche 1 bis 4, dadurch gekennzeichnet, daß die Signalleitungen mit asynchronen Signalen beaufschlagt sind.

6. Übertragungssystem nach einem der Ansprüche 1 bis 5, dadurch gekennzeichnet, daß die Signalleitungen mit Signalen im No-Return-to Zero-Format beaufschlagt sind.

7. Übertragungssystem nach einem der Ansprüche 1 bis 6, dadurch gekennzeichnet, daß die Signalleitungen mit Datentelegrammen beaufschlagt sind, die aus einem oder mehreren Blöcken bestehen, und daß jeder Block durch ein Startbit und ein Stoppbit begrenzt ist.

## Claims

1. Transmission system for digital and analog signals, with serial interfaces on a microcomputer control block (11) of a radio transmitting and receiving device (10) and at least one peripheral device (14) connected to the control block via line connections (13), it being possible to connect data inputs and data outputs of further peripheral devices (19) to branching points of the data signal line (57) used, characterized in that a pulse filter (55; 66; 56; 67) is provided in each case at the data outputs (50, 51) of the ports (52, 53) of the control blocks (11, 18) of the radio transmitting and receiving device (10) and of the peripheral device (14), which pulse filter rounds the edges of the data signals to be transmitted via the data signal line (57) designed as a bidirectional data signal line, and consequently reduces the steepness of their edges, in that the data signal line (57) is provided in a wired-AND structure between a pull-up resistor (63) at the data output (50) of the control block (11) of the radio transmitting and receiving device (10) and a pull-up resistor (64) at the data output (51) of the peripheral device (14).

2. Transmission system according to Claim 1, characterized in that the peripheral devices (14, 17) have a microcomputer control block (18) in each case.

3. Transmission system according to Claim 2, characterized in that the microcomputer control blocks (11, 18) have a built-in serial interface.

4. Transmission system according to one of Claims 2 and 3, characterized in that the interfaces of the microcomputer control blocks (11, 18) are supplemented by integrated interface driver circuits to form an RS-232-C or V24 interface.

5. Transmission system according to one of Claims 1 to 4, characterized in that the signal lines receive asynchronous signals.

6. Transmission system according to one of Claims 1 to 5, characterized in that the signal lines receive signals in the no-return-to-zero format.

7. Transmission system according to one of Claims 1 to 6, characterized in that the signal lines receive data telegrams comprising one or more blocks, and in that each block is delimited by a start bit and a stop bit.

## Revendications

1. Système de transmission de signaux numériques et analogiques à liaison de type série avec un bloc de commande à micro-ordinateur (11) d'un émetteur-récepteur radio (10) et d'au moins un appareil périphérique (14) relié au bloc de commande par des lignes de liaison (13), les points de dérivation de la ligne de signaux de données (57) utilisée pouvant être reliés aux entrées et sorties de données d'autres appareils périphériques (19), caractérisé en ce qu'un filtre impulsionnel (55 ; 66 ; 56 ; 67) est prévu respectivement sur les sorties de données (50, 51) des ports (52, 53) des blocs de commande (11, 18) de l'émetteur-récepteur radio (10) et de l'appareil périphérique (14), ce filtre atténuant les signaux de données à transmettre par une ligne de signaux de données en forme de ligne de signaux de données bi-directionnelle (57), en réduisant ainsi la pente des flancs, la ligne de signaux de données (57) étant prévue dans une structure de logique câblée ET entre une résistance d'excursion haute (63) à la sortie de données (50) du bloc de commande (11) de l'émetteur-récepteur radio (10) et une résistance d'excursion haute (64) à la sortie de données (51) de l'appareil périphérique (14).

2. Système de transmission selon la revendication 1, caractérisé en ce que les appareils périphériques (14, 17) ont chacun un bloc de commande à micro-ordinateur (18).

3. Système de transmission selon la revendication 2, caractérisé en ce que les blocs de commande à micro-ordinateur (11, 18) comportent une interface série, intégrée.

4. Système de transmission selon l'une des revendications 2 et 3, caractérisé en ce que les liaisons avec les blocs de commande à micro-ordinateur (11, 18) sont complétées par des circuits de commande de liaison, intégrés en liaison de type RS-232-C ou V24.

5. Système de transmission selon l'une des revendications 1 à 4, caractérisé en ce que les lignes de signaux reçoivent des signaux asynchrones.

6. Système de transmission selon l'une des revendications 1 à 5, caractérisé en ce que les lignes de signaux reçoivent des signaux en format NRZ (format non retour à zéro).

7. Système de transmission selon l'une des revendications 1 à 6, caractérisé en ce que les lignes de signaux reçoivent des télégrammes de données formés d'un ou plusieurs blocs, chaque bloc étant délimité par un bit de début et un bit de fin.
